Europäisches Patentamt

European Patent Office

Office européen des brevets

(11) Veröffentlichungsnummer : **0 139 225**
**B1**

(12) **EUROPÄISCHE PATENTSCHRIFT**

(45) Veröffentlichungstag der Patentschrift :
20.01.88

(21) Anmeldenummer : 84111127.1

(22) Anmeldetag : 18.09.84

(51) Int. Cl.⁴ : **H 02 P 8/00**

(54) Integrierbare Strombegrenzerschaltung.

(30) Priorität : 11.10.83 DE 3336951

(43) Veröffentlichungstag der Anmeldung :
02.05.85 Patentblatt 85/18

(45) Bekanntmachung des Hinweises auf die Patenterteilung : 20.01.88 Patentblatt 88/03

(84) Benannte Vertragsstaaten :
CH DE FR GB IT LI NL SE

(56) Entgegenhaltungen :
EP-A- 0 087 583
GB-A- 2 022 345
US-A- 3 757 193
US-A- 3 824 440
ELEKTRONIK Band 29, Nr. 23, November 1980, München; H. SAX "Schrittmotorenansteuerung mit monolitischen Bausteinen", Seiten 67-71

(73) Patentinhaber : **Siemens Aktiengesellschaft Berlin
und München
Wittelsbacherplatz 2
D-8000 München 2 (DE)**

(72) Erfinder : **Beitner, Michael
Elbacherstrasse 7
D-8000 München 80 (DE)**

## Beschreibung

Die vorliegende Erfindung betrifft integrierbare Strombegrenzerschaltung mit einem den zu begrenzenden Strom führenden Schalttransistor und einer mit ihrem Ausgang zur Beaufschlagung der Steuerelektrode des Schalttransistors vorgesehenen Regelschaltung, bei der der über den Schalttransistor fließende Strom zur Ableitung des Istwerts für die Regelschaltung verwendet und der dabei erhaltene Istwert zusammen mit einem vorgesehenen Sollwert an je einen Eingang eines Komparators gelegt und die vom Ausgang dieses Komparators gelieferte Regelabweichung unter Vermittlung eines Pulsdauer-Modulators zur Steuerung des Schalttransistors verwendet ist, bei der die Regelschaltung derart ausgestaltet ist, daß sie im Chopperbetrieb arbeitet, und bei der der Chopperbetrieb der Regelschaltung durch eine externe Steuerung der Regelschaltung ablösbar ist, wozu ein durch ein periodische Impulse lieferndes Steuerorgan beaufschlagter Steuereingang einerseits an den Eingang einer Schmitt-Triggerschaltung und andererseits an den Ausgang einer als Stromquelle wirksamen Transistorschaltung gelegt und dabei der Ausgang des Schmitt-Triggers gemeinsam mit dem den Schalttransistor steuern den Pulsdauer-Modulator zum Schalten der Stromquellen-Transistorschaltung verwendet ist.

Eine solche Strombegrenzerschaltung ist der EP-A-00 87 583 entnehmbar.

Strombegrenzerschaltungen dieser Art sind allgemein üblich und werden u. a. für die Ansteuerung von Schrittmotoren verwendet. Sie sind bevorzugt in Bipolartechnik hergestellt, obwohl — z. B. für den Schalttransistor — auch entsprechend dimensionierte MOS-Feldeffekttransistoren angewendet werden können.

Ein Schrittmotor besteht bekanntlich aus einem Rotor mit Permanentmagneten und einem Stator mit mehreren Erregerwicklungen. Fließt ein Strom durch die Wicklungen, so entsteht ein Magnetfeld, auf das sich der Rotor mit seinen Permanentmagneten einstellt. Wenn man die Wicklungsströme so ändert, daß das Magnetfeld rotiert, so bewegt sich mit ihm der Rotor. Bei hohen Drehzahlen müssen die Wicklungsströme schnell geändert werden, was durch die Wicklungsinduktivität erschwert wird. Daher muß eine hohe Spannung angelegt werden, die jedoch eine Strombegrenzung verlangt. Hierzu werden Schaltungen der oben definierten Art eingesetzt.

Als Stand der Technik kann hier die Literaturstelle « Elektronik » (1980) H. 23, S. 67-71, genannt werden, die sich sowohl mit Schrittmotoren als auch mit deren Ansteuerung befaßt. Dabei ist im Zusammenhang mit der vorliegenden Erfindung auf die sog. Choppersteuerung hinzuweisen, wozu eine Schaltung in Bild 10 dieser Literaturstelle dargestellt ist.

Andererseits war es auch bekannt (vgl. « Elektronik » (1980) H. 18, S. 47-54), Motore (z. B. auch Schrittmotore) durch einen Mikroprozessor anzusteuern. Dabei kann es erwünscht sein, eine Steuerschaltung zu schaffen, die einerseits nach dem Chopperprinzip selbsttätig die Regelung des Schrittmotors zu übernehmen in der Lage ist und die andererseits sich auch dazu eignet, daß trotz der Anwesenheit eines nach dem Chopperprinzip arbeitenden Regelkreises eine externe Steuerung möglich ist und daß dabei der Regelkreis den Chopperbetrieb mit dem von der externen Steuerung vorgegebenen Takt aufrecht hält (also den Betrieb als Monoflop einstellt), daß aber mit dem Aufhören der externen Taktsteuerung die alte Steuerung durch den Chopperbetrieb mit Monoflop-Funktion selbsttätig wieder zum Einsatz kommt.

Es ist Aufgabe der vorliegenden Erfindung, eine solche Ausgestaltung für eine Strombegrenzerschaltung anzugeben, die noch zusätzlich den Vorteil hat, daß sie sich ohne großen Aufwand monolithisch realisieren läßt.

Diese Aufgabe wird bei einer Strombegrenzerschaltung der eingangs genannten Art erfindungsgemäß dadurch gelöst, daß der Ausgang des Schmitt-Triggers über einen Inverter gemeinsam mit dem Ausgang des als Operationsverstärker ausgestalteten Komparators unter Verwendung eines NAND-Gatters zur Steuerung des Setzeingangs einer ersten RS-Flip-Flopzelle verwendet und hierzu ein dritter Eingang dieses NAND-Gatters durch den Ausgang einer zweiten RS-Flip-Flopzelle gesteuert ist, daß die beiden Eingänge der zweiten RS-Flip-Flopzelle in zueinander invertierter Form durch den Ausgang des Schmitt-Triggers gesteuert sind und daß der Pulsdauer-Modulator durch das erste RS-Flip-Flop gegeben ist, dessen Ausgang sowohl zur Steuerung des Schalttransistors als auch zur Steuerung der Stromquellentransistorschaltung vorgesehen ist.

Demgemäß arbeitet die erfindungsgemäße Schaltung in zwei verschiedenen Betriebsarten, nämlich :

a) Durch das Vorhandensein eines Zeitglieds, insbesondere eines RC-Glieds, das die Verbindung des Eingangs des Schmitt-Triggers mit dem Bezugspotential (Masse) bildet, ist der freilaufende Monoflop-Betrieb, d. h. der Chopperbetrieb, gegeben. Das Zeitglied kann bei einer monolithischen Realisierung der Schaltung sowohl intern als auch extern vorgesehen sein.

b) Wird der Eingang des Schmitt-Triggers zusätzlich zur Beaufschlagung durch das Zeitglied oder allein für sich durch ein externes Steuersignal mit Masse als Bezugspunkt beaufschlagt, so ermöglicht das synchron getaktete Schalten dort das synchron getaktete Schalten mit wenigstens einer zweiten der Erfindung entsprechenden Strombegrenzerschaltung, was für den Einsatz bei Schrittmotoren von Bedeutung ist.

Man kann also unter Vermittlung nur eines einzigen Anschlusses die erfindungsgemäße Schaltung von der einen Betriebsart auf die andere umschalten.

Im übrigen liefert die erfindungsgemäße Schaltung zur dynamischen Strombegrenzung bei beiden Betriebsarten an den Schalttransistor ein Abschaltsignal, wenn der Strom durch diesen Transistor einen vorgegebenen Sollwert überschritten hat. In der Betriebsart a) ist es möglich, die Zeitdauer für die Abschaltung des Transistors durch das genannte Zeitglied festzulegen. In der Betriebsart b) kann durch die negativen Flanken eines an den Eingang des Schmitt-Triggers angelegten Steuersignals der Zeitpunkt zum Wiedereinschalten des Transistors im Lastzweig also des Schalttransistors, vorgegeben werden. Die Schaltfrequenzen von in mehreren Lastzweigen arbeitenden Schalttransistoren lassen sich, wie bereits angedeutet, so durch ein gemeinsames Steuersignal synchronisieren.

Die Erfindung wird nun anhand der Zeichnung näher beschrieben. Diese stellt zwar eine bevorzugte Ausgestaltung der Erfindung dar, sie läßt aber ohne weiteres das Grundprinzip der Erfindung erkennen.

Der in üblicher Weise ausgestaltete Lastkreis L, also z. B. eine zu steuernde Motorwicklung W, liegt mit seinem einen Ende an der Klemme für das für den Betrieb des Lastkreises L zuständige Versorgungspotential und mit seinem anderen Ende am Kollektor des Schalttransistors T, der im gezeichneten Beispielsfall durch einen npn-Leistungstransistor gegeben ist. Der Emitter des Schalttransistors T ist über einen Widerstand R an den sowohl für den Betrieb des Lastkreises L als auch der Strombegrenzerschaltung gemeinsamen Anschluß für das Bezugspotential (Masse) gelegt. Der Emitter des Schalttransistors T ist außerdem mit dem einen Eingang des Komparators K verbunden, während dessen zweiter Eingang durch den Sollwertgeber beaufschlagt ist. Der Komparator ist entsprechend der Definition der Erfindung durch einen Operationsverstärker gegeben, der einen invertierenden Eingang und einen nichtinvertierenden Eingang aufweist. Dabei liegt der Emitter des Schalttransistors T im gezeichneten Beispielsfall am invertierenden und der Sollwertgeber S am nichtinvertierenden Eingang des Komparators K.

Der Sollwertgeber S ist im gezeichneten Ausführungsbeispiel durch einen einstellbaren ohmschen Spannungsteiler gegeben, dessen Fußpunkt durch den Anschluß für das Bezugspotential gegeben und dessen oberes Ende an den Anschluß für das zum Betrieb der Strombegrenzerschaltung dienende Versorgungspotential angelegt ist. Desgleichen ist der Ausgang des Komparators K über einen Widerstand r* an dieses Versorgungspotential gelegt.

Ein erstes RS-Flip-Flop FF1 liegt mit seinem Reseteingang $\overline{R1}$ ebenfalls am Ausgang des Komparators K. Dieses Flip-Flop FF1 bildet entsprechend der Definition der Erfindung den Pulsdauer-Modulator, da dessen Ausgang Q1 zur Steuerung der Basis des npn-Schalttransistors T vorgesehen ist. Außerdem dient entsprechend der Erfindung dieser Ausgang zur Steuerung der gemäß der Erfindung vorgesehenen Stromquellen-Transistorschaltung, deren Ausgang durch den Kollektor eines zum Schalttransistor T komplementären Transistors t, also eines pnp-Transistors, gegeben ist. Dieser Ausgang ist ferner gemäß der Definition der Erfindung an den — gleichzeitig zur Beaufschlagung eines Schmitt-Triggers St dienenden-externen Steuereingang SE gelegt.

Der Schmitt-Trigger St ist in üblicher Weise durch einen mit einem Vorwiderstand versehenen und durch einen weiteren Widerstand überbrückten Operationsverstärker gegeben, der im gezeichneten Beispielsfall durch zwei hintereinander geschaltete Inverter realisiert ist. Der Ausgang dieses Schmitt-Triggers St ist über einen weiteren Inverter i1 einerseits an den einen Eingang eines NAND-Gatters G1 und andererseits an den Setzeingang $\overline{S2}$ eines zweiten RS-Flip-Flops FF2 angeschlossen und liegt außerdem über einen weiteren Inverter i2 am Rücksetzeingang $\overline{R2}$ von FF2. Der Ausgang Q2 von FF2 steuert einen zweiten Eingang des genannten NAND-Gatters G1, während ein dritter Eingang dieses NAND-Gatters G1 vom Ausgang des Komparators K beaufschlagt ist. Der Ausgang des NAND-Gatters G1 liegt am Setzeingang $\overline{S1}$ des ersten Flip-Flops FF1.

Um nun durch den Ausgang Q1 sowohl die Steuerung des Schalttransistors T als auch der Stromquellenschaltung t zu erreichen, sind zwei weitere NAND-Gatter G2 und G3 und zwei weitere Inverter i3 und i4 vorgesehen. Dabei liegt das NAND-Gatter G2 mit seinem einen Eingang am Ausgang Q1 des ersten RS-Flip-Flops FF1 und mit seinem zweiten Eingang an einem — zugleich einen Eingang des anderen NAND-Gatters G3 steuernden — Eingang für ein Inhibitsignal IH.

Der Ausgang des vom Flip-Flop FF1 gesteuerten NAND-Gatters G2 ist über den Inverter i3 und vorzugsweise einen Widerstand R1 mit der Basis des Schalttransistors T verbunden. Er liegt außerdem an einem weiteren Eingang des genannten dritten NAND-Gatters G3, das zur Steuerung des Stromquellentransistors t vorgesehen ist.

Die Stromquellentransistorschaltung ist im gezeichneten Beispielsfall durch einen Transistor t gegeben, der komplementär zum Schalttransistor und den übrigen in der Strombegrenzerschaltung (d. h. den Flip-Flops FF1, FF2, dem Operationsverstärker K, dem Schmitt-Trigger St und den Gattern G1-G3 sowie i1-i4) verwendeten Transistoren ausgebildet ist. Er ist also in dem gezeichneten Fall durch einen pnp-Transistor t gegeben, dessen Emitter — ggf. unter Verwendung eines Vorwiderstands R3 — mit dem Anschluß für das Versorgungspotential der Strombegrenzerschaltung verbunden ist. Anstelle eines einzelnen Transistors könnte auch eine aus pnp-Transistoren gebildete Stromspiegel-Konstantstromquelle verwendet werden, die dann durch das NAND-Gatter G3 ein- und ausgeschaltet wird.

In dem gezeichneten Ausführungsbeispiel ist zu diesem Zweck der Ausgang des NAND-Gatters G3 unter Vermittlung des Inverters i4 und ggf. eines Widerstands R2 an den Steuereingang der Stromquellen-Transistorschaltung, d. h. im gezeichneten Beispielsfall an die Basis des pnp-Transistors t, gelegt.

Der Eingang des Schmitt-Triggers St und damit der durch den Kollektor des pnp-Transistors t gegebene Ausgang der Stromquellen-Transistorschaltung liegt an einem als Anschlußklemme ausgebildeten Schaltungspunkt SE, der durch die externe Beaufschlagung mittels eines gesteuerten Taktgenerators TG oder durch das bereits genannten Zeitglied mit der Klemme für das Bezugspotential für den Strombegrenzer verbunden ist. Insbesondere besteht das Zeitglied aus der Parallelschaltung eines Kondensators C mit einem Widerstand r. Das Zeitglied kann aber auch zusammen mit der Schaltung des Strombegrenzers in einem Halbleiterchip integriert sein, falls es genügt, den Kondensator und den Widerstand durch eine der üblichen integrationsfähigen Strukturen zu realisieren.

Zum Betrieb der Schaltung kann nun folgendes festgestellt werden :

Nach Freigabe der Schaltung über den Inhibit-Eingang IH steigt die Spannung UI am Strommeß-widerstand R bis zur Schaltschwelle US des Komparators K an. Der von diesem abgegebene negative Resetimpuls schaltet über das Flip-Flop FF1 den Transistor T im Lastzweig ab und sperrt den als Stromquelle geschalteten Transistor t. Die Entladung des RC-Glieds erfolgt bis zur L-Schwelle (L = Low) des Schmitt-Triggers St. Unter der Voraussetzung, daß der Istwert des Stromes durch den Schalttransistor T unter den Sollwert abgesunken ist, kann ein durch die Schaltverzögerung von FF2 entstehender Setzimpuls auf das erste Flip-Flop FF1 wirken. Der Schalttransistor T wird dadurch leitend und über den Transistor t, also die Stromquelle, das RC-Glied C, r auf + $U_s$ aufgeladen. Erst nach dem Erreichen der oberen Schaltschwelle des Schmitt-Triggers St kann das Monoflop erneut ausgelöst werden. Dies ist dann von Bedeutung, wenn nach dem Einschalten des Transistors T die Schaltschwelle $U_s$ des Komparators K schneller erreicht wird als die Aufladung des RC-Glieds dauert.

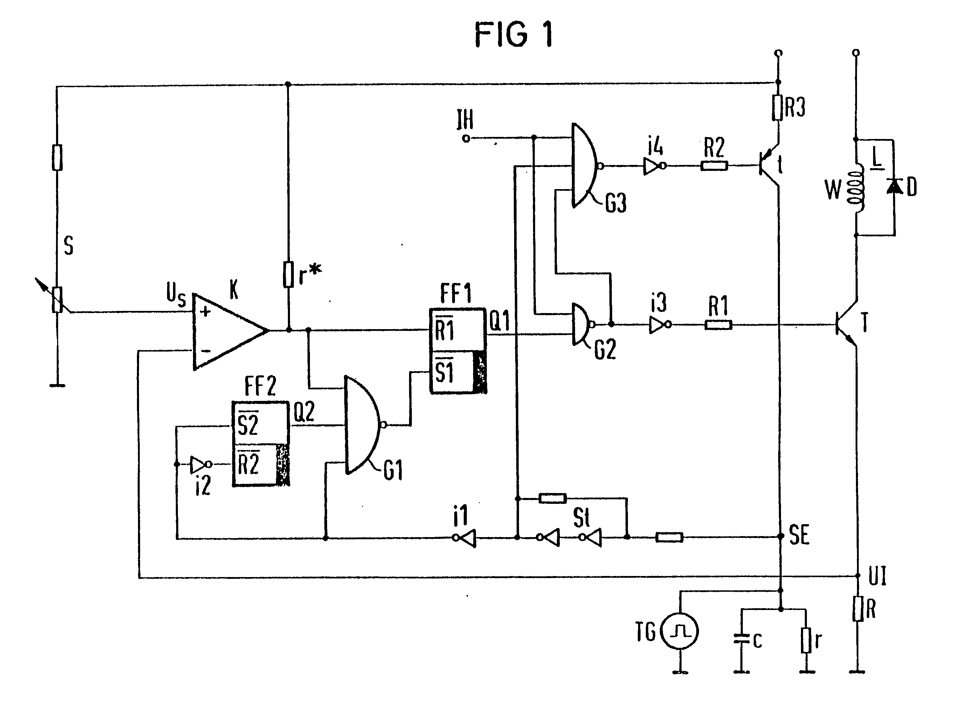

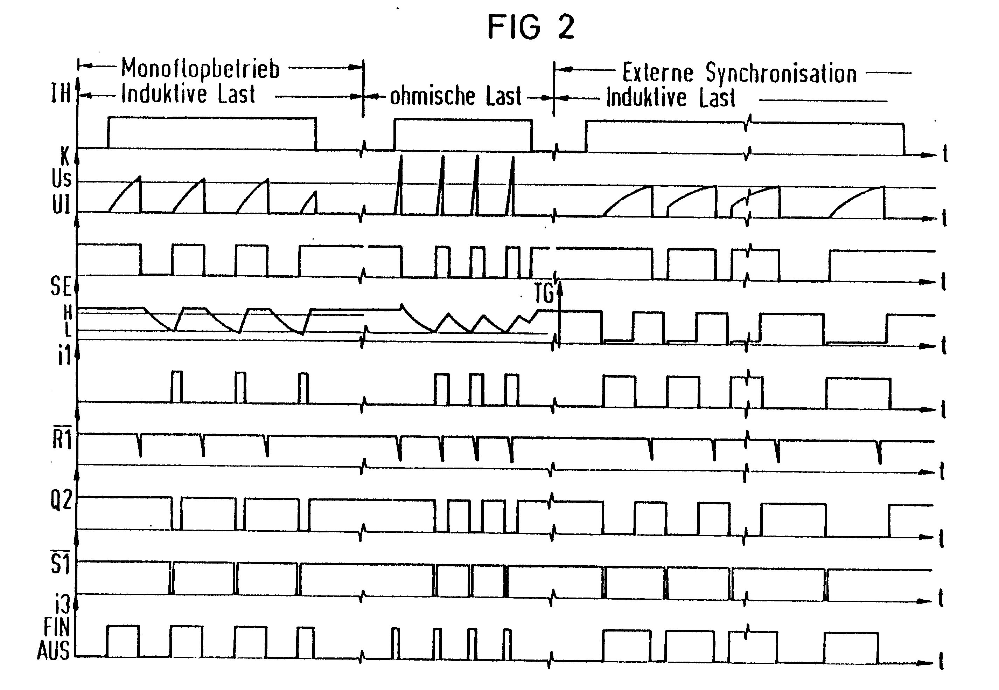

In diesem Zusammenhang kann auf das in Fig. 2 dargestellte Zeitverhalten der Schaltung gemäß Fig. 1 für ohmsche Last hingewiesen werden.

Wird nun ein L-Impuls des Steuersignals vom Taktgeber TG an den Eingang SE gelegt, so wird durch diesen das Flip-Flop FF1 mit einem kurzen negativen Setzimpuls gesetzt. Damit schaltet der Transistor T ein und die den Laststrom abbildende Spannung UI steigt an. Weil ab diesem Zeitpunkt der Transistor t aktiviert ist, muß der externe Oszillator TG, der den besagten externen L-Impuls (also das Steuersignal TG) liefert, den Ladestrom gegen Masse ableiten können, wobei ein Wiedereinschalten wegen FF2 nicht durch ein statisches L-Signal am Synchroneingang SE sondern nur durch eine neuerlich angelegte negative Flanke möglich ist.

Durch die dynamische Ansteuerung wird also die Synchronisierung unabhängig von der Zeitkonstanten des Lastzweigs L. Erreicht somit der Laststrom $I_L$ den Sollwert, ehe das Synchronsignal wieder auf H (= High) gegangen ist, dann schaltet der Transistor T nicht unmittelbar nach dem Abschalten wieder ein.

Bei der in Fig. 1 gezeigten Ausgestaltung ist eine durch eine Motorwicklung W gegebene induktive Last L gezeichnet. Die der Wicklung parallel geschaltete Diode D dient als Freilaufdiode mit der Aufgabe, die Entladung der Induktivität W im Kurzschlußfall zu bewirken und damit den Schalttransistor T vor der Rückschlagspannung zu schützen.

Es ist verständlich, daß bei einer Schaltung gemäß Fig. 1 der Stromquellentransistor durch einen npn-Transistor und die übrigen in der Schaltung verwendeten Transistoren durch pnp-Transistoren ersetzt werden könnten, wobei allerdings die Ansprechgeschwindigkeit der Schaltung reduziert werden würde. Auch eine Ausgestaltung in MOS-Technik wäre möglich.

Ergänzend und zusammenfassend läßt sich zu der Erfindung somit folgendes feststellen : Die Schaltung zur dynamischen Strombegrenzung arbeitet sowohl im Chopperbetrieb mit freilaufender Monoflopfunktion als auch mit externer Steuerung der Einschaltzeitpunkte für den Leistungstransistor T über einunddenselben Anschluß SE. Die Schaltung ist so ausgestaltet, daß der Leistungstransistor T immer nur dann eingeschaltet werden kann, wenn der Strom im Lastzweig L sicher unterhalb des eingestellten Sollwerts liegt, und der Leistungstransistor T immer beim Erreichen des Sollwerts abgeschaltet wird, unabhängig vom Zustand am Eingang SE des Schmitt-Triggers St.

**Patentansprüche**

1. Integrierbare Strombegrenzerschaltung mit einem den zu begrenzenden Strom führenden Schalttransistor (T) und einer mit ihrem Ausgang zur Beaufschlagung der Steuerelektrode des Schalttransistors (T) vorgesehenen Regelschaltung, bei der der über den Schalttransistor (T) fließende Strom zur Ableitung des Istwerts für die Regelschaltung verwendet und der dabei erhaltene Istwert zusammen mit einem vorgesehenen Sollwert an je einen Eingang eines Komparators (K) gelegt und die vom Ausgang dieses Komparators gelieferte Regelabweichung unter Vermittlung eines Pulsdauer-Modulators (FF1) zur Steuerung des Schalttransistors verwendet ist, bei der die Regelschaltung derart ausgestaltet ist, daß sie im Chopperbetrieb arbeitet, und bei der der Chopperbetrieb der Regelschaltung durch eine externe Steuerung (TG) der Regelschaltung ablösbar ist, wozu ein durch ein periodische Impulse lieferndes Steuerorgan (TG) beaufschlagter Steuereingang (SE) einerseits an den Eingang einer Schmitt-Triggerschaltung (St) und andererseits an den Ausgang einer als Stromquelle wirksamen Transistorschaltung (t) gelegt und dabei der Ausgang des Schmitt-Triggers (St) gemeinsam mit dem den Schalttransistor (T) steuernden Pulsdauer-Modulator zum Schalten der Stromquellen-Transistorschaltung (t) verwendet ist, dadurch gekennzeichnet, daß der Ausgang des Schmitt-Triggers (St) über einen Inverter (i1) gemeinsam mit dem Ausgang des als Operationsverstärker ausgestalteten Komparators (K) unter Verwendung eines NAND-Gatters (G1) zur Steuerung des Setzeingangs ($\overline{ST}$) einer ersten RS-Flip-Flopzelle (FF1) verwendet und hierzu ein dritter Eingang dieses NAND-Gatters (G1) durch den Ausgang (Q2) einer zweiten RS-Flip-Flopzelle (FF2) gesteuert ist, daß die beiden Eingänge ($\overline{S2}$, $\overline{R2}$) der zweiten RS-Flip-Flopzelle (FF2) in zueinander invertierter Form durch den Ausgang des Schmitt-Triggers (St) gesteuert sind und daß der Pulsdauer-Modulator durch das erste RS-Flip-Flop (FF1) gegeben ist, dessen Ausgang (Q1) sowohl zur Steuerung des Schalttransistors (T) als auch zur Steuerung der Stromquellentransistorschaltung (t) vorgesehen ist.

2. Strombegrenzerschaltung nach Anspruch 1, dadurch gekennzeichnet, daß der Ausgang des als Pulsdauer-Modulators dienenden ersten RS-Flip-Flops (FF1) einerseits über ein erstes logisches Gatter (G2) mit Negationseigenschaft einerseits an den Eingang eines zur Steuerung des Schalttransistors (T) dienenden Inverters (i3) und andererseits an den einen Eingang eines weiteren NAND-Gatters (G3 gelegt ist, dessen zweiter Eingang durch den Ausgang des Schmitt-Triggers (St) beaufschlagt ist und dessen Ausgang unter Vermittlung eines weiteren Inverters (i4) zur Steuerung der Stromquellen-Transistorschaltung (t) dient.

3. Strombegrenzerschaltung nach Anspruch 2, dadurch gekennzeichnet, daß das am Ausgang des als Pulsdauer-Modulator dienenden ersten RS-Flip-Flops (FF1) liegende Gatter (G2) mit Negationseigenschaft ebenfalls als NAND-Gatter ausgebildet ist, dessen zweiter Eingang — ebenso wie ein weiterer Eingang des von ihm gesteuerten und zum Schalten der Stromquellen-Transistorschaltung (St) vorgesehenen NAND-Gatters (G3) — durch ein gemeinsames Inhibitsignal (IH) beaufschlagbar ist.

4. Strombegrenzerschaltung nach einem der Ansprüche 1 bis 3, dadurch gekennzeichnet, daß der extern zu beaufschlagende Steuereingang (SE) über den Eingangswiderstand des Schmitt-Triggers (St) an eine aus zwei hintereinander geschalteten Invertern bestehende und von einem weiteren Widerstand überbrückte Kette gelegt ist, deren Ausgang den Ausgang des Schmitt-Triggers (St) bildet.

5. Strombegrenzerschaltung nach einem der Ansprüche 1-4, dadurch gekennzeichnet, daß der Ausgang des Komparators (K) über einen Widerstand (r*) an die Klemme für das Versorgungspotential gelegt ist, die zugleich das Fußpunktspotential für die Stromquellen-Transistorschaltung (t) führt und daß der (bzw. die) die Stromquellen-Transistorschaltung bildenden Transistor (en) (t) zum Schalttransistor (T) und den übrigen in der Schaltung verwendeten Transistoren komplementär ist (bzw. sind).

6. Strombegrenzerschaltung nach einem der Ansprüche 1-5, dadurch gekennzeichnet, daß sowohl der Schalttransistor (T) als auch die Stromquellen-Transistorschaltung (t) über einen Widerstand (R1 bzw. R2) angesteuert sind.

7. Strombegrenzerschaltung nach einem der Ansprüche 5 und 6, dadurch gekennzeichnet, daß der Sollwertgeber (S) durch einen zwischen der Klemme für das Versorgungspotential und der Klemme für das Bezugspotential (Masse) liegenden — insbesondere einstellbaren — Spannungsteiler gegeben ist, dessen Teilerpunkt am nichtinvertierenden Eingang des Komparators (K) liegt, während der invertierende Eingang des Komparators (K) mit der Stromeingangselektrode (Emitter) des Schalttransistors (T) verbunden ist und daß außerdem zur Ableitung des Istwerts für die Regelschaltung (UI) die Stromeingangselektrode des Schalttransistors (T) über einen Strom-Meßwiderstand (R) mit der Klemme für das Bezugspotential verbunden ist, während die Stromausgangselektrode (Kollektor) des Schalttransistors über die durch die Strombegrenzerschaltung zu beaufschlagende Last (L) mit der Klemme für ein Versorgungspotential verbunden ist.

8. Strombegrenzerschaltung nach einem der Ansprüche 1 bis 7, dadurch gekennzeichnet, daß der Schalttransistor (T) durch einen npn-Leistungstransistor gegeben ist.

9. Strombegrenzerschaltung nach einem der Ansprüche 1 bis 8, dadurch gekennzeichnet, daß die Stromausgangselektrode (Kollektor) des Schalttransistors (T) über eine zu einem Schrittmotor gehörende Wicklung (W) und eine zu dieser Wicklung parallel liegende Freilaufdiode (D) an die Klemme für das für den Lastkreis (L) zuständige Versorgungspotential gelegt ist.

10. Strombegrenzerschaltung nach einem der Ansprüche 1 bis 9, dadurch gekennzeichnet, daß der Eingang (SE) über ein, insbesondere durch einen Kondensator mit parallelgeschaltetem Widerstand bestehendes Zeitglied (r, C) mit der Klemme für das Bezugspotential der Strombegrenzerschaltung verbunden ist.

## Claims

1. An integrable current limiting circuit comprising a switching transistor (T) which conducts the current which is to be limited, and a regulating circuit whose output serves to act upon the control electrode of the switching transistor (T), where the current which flows across the switching transistor (T) is used to obtain the actual value for the regulating circuit, and the actual value, thus obtained, is applied, together with a given theoretical value, to an input of a comparator (K), and where the deviation supplied by the output of this comparator is used, via a pulse duration modulator (FF1), to control the switching transistor, where the regulating circuit is designed in such manner that it operates as a chopper and where the chopper operation of the regulating circuit can be inhibited by an external control unit (TG) of the regulating circuit, for which purpose a control input (SE), acted upon by a control element (TG) which supplies periodic pulses, is connected on the one hand to the input of a Schmitt trigger circuit (St) and on the other hand to the output of a transistor circuit (t) which acts as current source, where the output of the Schmitt trigger (St) serves, together with the pulse duration modulator which controls the switching transistor (T), to switch the current source transistor circuit (t), characterised in that the output of the Schmitt trigger (St) is used via an inverter (i1) together with the output of the comparator (K), which consists of an operational amplifier, to drive a NAND-gate (G1) serving to control the setting input ($\overline{S1}$) of a first RS flip-flop cell (FF1), and for this purpose a third input of this NAND-gate (G1) is controlled by the output (Q2) of a second RS flip-flop cell (FF2), that the two inputs ($\overline{S2}$, $\overline{R2}$) of the second RS flip-flop cell (FF2) are controlled in mutually-inverted form by the output of the Schmitt trigger (St), and that the pulse duration modulator is formed by the first RS flip-flop (FF1), whose output (Q1) serves both to control the switching transistor (T) and the current source transistor circuit (t).

2. A current limiting circuit as claimed in Claim 1, characterised in that the output of the first RS flip-flop (FF1), which serves as pulse duration modulator, is connected on the one hand via a first logic gate (G2) having negation properties to the input of an inverter (i3), which serves to control the switching transistor (T), and on the other hand to the first input of a further NAND-gate (G3), whose second input is acted upon by the output of the Schmitt trigger (St) and whose output serves, via a further inverter (i4), to control the current source transistor circuit (t).

3. A current limiting circuit as claimed in Claim 2, characterised in that the gate (G2) with negation properties, connected to the output of the first RS flip-flop (FF1) serving as pulse duration modulator, is likewise formed by a NAND-gate whose second input can be acted upon by a common inhibit signal (IH) in the same way as a further input of the NAND-gate (G3) which it controls and which serves to switch the current source transistor circuit (St).

4. A current limiting circuit as claimed in one of Claims 1 to 3, characterised in that the control input (SE), which is to be acted upon externally, is connected via the input impedance of the Schmitt trigger (St) to a chain composed of two series connected inverters bridged by a further resistor, whose output forms the output of the Schmitt trigger (St).

5. A current limiting circuit as claimed in one of Claims 1 to 4, characterised in that the output of the comparator (K) is connected via a resistor (r*) to the supply potential terminal which simultaneously conducts the base potential for the current source transistor circuit (t), and that the transistor(s) which form(s) the current source transistor circuit is (are) complementary to the switching transistor (T) and the other transistors used in the circuit.

6. A current limiting circuit as claimed in one of Claims 1 to 5, characterised in that both the switching transistor (T) and the current source transistor circuit (t) are each driven via a respective resistor (R1, R2).

7. A current limiting circuit as claimed in one of Claims 5 and 6, characterised in that the theoretical value generator (S) is formed by a voltage divider arranged between the supply potential terminal and the reference potential terminal (earth), in particular adjustable, the tapping point connected to the non-inverting input of the comparator (K), whereas the inverting input of the comparator (K) is connected to the current input electrode (emitter) of the switching transistor (T), and that moreover in order to derive the actual value for the regulating circuit (UI), the current input electrode of the switching transistor (T) is connected via a current measuring resistor (R) to the reference potential terminal, whereas the current output electrode (collector) of the switching transistor is connected to a supply potential terminal via the load (L) which is to be acted upon by the current limiting circuit.

8. A current limiting circuit as claimed in one of Claims 1 to 7, characterised in that the switching transistor (T) is an npn power transistor.

9. A current limiting circuit as claimed in one of Claims 1 to 8, characterised in that the current output electrode (collector) of the switching transistor (T) is connected to the supply potential terminal for the load circuit (L) via a winding (W) which forms part of a stepping motor, and via a free-running diode (D) connected in parallel to this winding.

10. A current limiting circuit as claimed in one of Claims 1 to 9, characterised in that the input (SE) is connected to the reference potential terminal of the current limiting circuit via a timer (rC) which is formed in particular by a capacitor connected in parallel to a resistor.

**Revendications**

1. Circuit intégrable de limitation du courant comportant un transistor de commutation (T) conduisant le courant devant être limité, et un circuit de réglage, dont la sortie est destinée à charger l'électrode de commande du transistor de commutation (T), et dans lequel le courant traversant le transistor de commutation (T) sert à dériver la valeur réelle pour le circuit de réglage et la valeur réelle alors obtenue est appliquée, ainsi qu'une valeur de consigne prévue, à des entrées respectives d'un comparateur (T) et l'écart de réglage, délivré par la sortie de ce comparateur, est utilisé, au moyen d'un modulateur d'impulsions en durée (FF1) pour commander le transistor de commutation, et dans lequel le circuit de régulation est agencé de telle sorte qu'il fonctionne selon un fonctionnement en hacheur, et dans lequel le fonctionnement en hacheur du circuit de réglage peut être interrompu par une commande extérieure (TG) du circuit de réglage et à cet effet une entrée de commande (SE), qui est chargée par un organe de commande (TG) délivrant des impulsions périodiques, est raccordée d'une part à l'entrée d'un circuit déclencheur de Schmitt (St) et d'autre part à la sortie d'un circuit à transistor (t) agissant en tant que source de courant, et la sortie du déclencheur de Schmitt (St) est utilisée en commun avec le modulateur d'impulsions en durée, qui commande le transistor de commutation (t), pour commuter le circuit (t) à transistors formant la source de courant, caractérisé par le fait que la sortie du déclencheur de Schmitt (St) est utilisée par l'intermédiaire d'un inverseur (ii), en commun avec la sortie du comparateur (K) réalisée en tant qu'amplificateur opérationnel, moyennant l'utilisation d'une porte NON-ET (G1), pour commander l'entrée de positionnement ($\overline{S1}$) d'un premier circuit à bascule bistable de type RS (FF1) et qu'à cet effet une troisième entrée de cette porte NON-ET (G1) est commandée par la sortie (Q2) d'un second circuit à bascule bistable de type RS (FF2), que les deux entrées ($\overline{S2}$, $\overline{R2}$) du second circuit à bascule bistable de type RS (FF2) sont commandées, selon des modes réciproquement inverses, par la sortie du déclencheur de Schmitt (St) et que le modulateur d'impulsions en durée est formé par le premier circuit à bascule bistable (FF1), dont la sortie (Q1) est prévue aussi bien pour la commande du transistor de commutation (T) que pour la commande du circuit à transistors (t) formant source de courant.

2. Circuit de limitation du courant suivant la revendication 1, caractérisé par le fait que la sortie de la première bascule bistable de type RS (FF1), qui est utilisée en tant que modulateur d'impulsions en durée, est raccordée d'une part par l'intermédiaire d'une première porte logique (G2) présentant une caractéristique de négation, à l'entrée d'un inverseur (i3) servant à commander le transistor de commutation (T) et d'autre part à une entrée d'une autre porte NON-ET (G3), dont la seconde entrée est chargée par la sortie du déclencheur de Schmitt (St) et dont la sortie sert, moyennant l'interposition d'un autre inverseur (i4), à commander le circuit à transistor (t) formant source de courant.

3. Circuit de limitation du courant suivant la revendication 2, caractérisé par le fait que la porte (G2), qui est raccordée à la sortie de la première bascule bistable de type RS (FF1) utilisée en tant que modulateur d'impulsions en durée, et qui présente une caractéristique de négation, est également réalisée sous la forme d'une porte NON-ET, dont la seconde entrée peut être chargée par un signal d'inhibition commun (IH) — tout comme une autre entrée de la porte NON-ET (G3) commandée par ce signal et servant à réaliser la commutation du circuit à transistor (St) formant source de courant.

4. Circuit de limitation du courant suivant l'une des revendications 1 à 3, caractérisé par le fait que l'entrée de commande (SE), qui doit être chargée de l'extérieur, est raccordée par l'intermédiaire de la résistance d'entrée du déclencheur de Schmitt (St) à une chaîne constituée par deux inverseurs branchés en série et shuntés par une autre résistance et dont la sortie forme la sortie du déclencheur de Schmitt (St).

5. Circuit de limitation du courant suivant l'une des revendications 1-4, caractérisé par le fait que la sortie du comparateur (K) est raccordée par l'intermédiaire d'une résistance (r*) à la borne d'application du potentiel d'alimentation, qui applique simultanément le potentiel de base pour le circuit à transistors (t) formant source de courant, et que le ou les transistors (t), qui constitue(nt) le circuit à transistors formant source de courant, est (sont) complémentaire(s) des autres transistors utilisés dans le circuit.

6. Dispositif d'alimentation du courant suivant l'une des revendications 1-5, caractérisé par le fait qu'aussi bien le transistor de commutation (T) que le circuit à transistors (t) formant source de courant sont commandés par l'intermédiaire d'une résistance (R1 ou R2).

7. Circuit de limitation du courant suivant l'une des revendications 5 et 6, caractérisé par le fait que le générateur de valeurs de consigne (S) est formé par un diviseur de tension — notamment réglable — situé entre la borne prévue pour le potentiel d'alimentation et la borne prévue pour le potentiel de référence (masse) et dont le point de division est raccordé à l'entrée non inverseuse du comparateur (K), tandis que l'entrée inverseuse de ce dernier est reliée à l'électrode d'entrée du courant (émetteur) du transistor de commutation (T), et qu'en outre, pour la dérivation de la valeur réelle pour le circuit de réglage (UI), l'électrode d'entrée du courant du transistor de commutation (T) est reliée par l'intermédiaire d'une résistance (T) de mesure du courant à la borne prévue pour le potentiel de référence, tandis que l'électrode de sortie du courant (collecteur) du transistor de commutation est reliée par l'intermédiaire de la charge (L), qui doit être chargée par le circuit de limitation du courant, à la borne prévue pour le potentiel d'alimentation.

8. Circuit de limitation du courant suivant l'une des revendications 1 à 7, caractérisé par le fait que le transistor de commutation (T) est formé par un transistor de puissance npn.

9. Circuit de limitation du courant suivant l'une des revendications 1 à 8, caractérisé par le fait que l'électrode de sortie du courant (collecteur) du transistor de commutation (T) est raccordée, par l'intermédiaire d'un enroulement (W) faisant partie d'un moteur pas-à-pas et d'une diode à effet unidirectionnel (D) branchée en parallèle avec cet enroulement, à la borne d'application du potentiel d'alimentation qui appartient au circuit de charge (L).

10. Circuit de limitation du courant suivant l'une des revendications 1 à 9, caractérisé par le fait que l'entrée (SE) est reliée par l'intermédiaire d'un circuit tamporisé (r, C) constitué par un condensateur en parallèle avec lequel est branchée une résistance, à la borne d'application du potentiel de référence du circuit de limitation du courant.

FIG 1

0 139 225

FIG 2

0 139 225